# FASCICULE DE BREVET EUROPEEN

(11) **EP 3 952 138 B1**
(45) Date de publication et mention de la délivrance du brevet: **15.04.2026**
(21) Numéro de dépôt: 21189195.7
(22) Date de dépôt: 02.08.2021
(51) Int. Cl.: H04B 7/185, H04W 74/00

(54) **PROCÉDURE D'ENTRÉE DANS UN RÉSEAU SATELLITAIRE À SAUT DE FAISCEAUX**
VERFAHREN FÜR DEN ZUGANG ZU EINEM SATELLITENNETZ DURCH BEAM-HOPPING
PROCEDURE FOR INPUT IN A SATELLITE NETWORK WITH BEAM-HOPPING

(30) Priorité: 06.08.2020 FR 2008318
(43) Date de publication de la demande: 09.02.2022
(73) Titulaire: THALES, 92190 Meudon (FR)
(72) Inventeur: BAUDOIN, Cédric, 31100 TOULOUSE (FR); LEVY, Jean-Christophe, 31036 TOULOUSE (FR); COULOMB, Bernard, 31100 TOULOUSE (FR); QUIGNON, Thierry, 31037 TOULOUSE CEDEX 1 (FR); LECONTE, Katia, 31036 TOULOUSE (FR); GINESTE, Mathieu, 31100 TOULOUSE (FR); WAUTELET, Xavier, 31037 TOULOUSE CEDEX 1 (FR)
(74) Mandataire: Atout PI Laplace

(56) Documents cités:
- EP-A1- 3 579 458
- WO-A2-01/26251

## Description

### Domaine technique :

La présente invention se situe dans le domaine des transmissions satellitaires, et porte plus particulièrement sur une méthode d'entrée dans un réseau de communications satellitaires pour un terminal utilisateur lorsque les communications du réseau satellitaire sont organisées par un mécanisme de saut de faisceaux. L'invention s'applique aux satellites géostationnaires et aux satellites défilants.

### Technique antérieure :

L'entrée dans le réseau satellitaire est une fonction majeure des systèmes de communication par satellite. Elle concerne à la fois la première entrée d'un terminal utilisateur (ou terminal satellitaire) dans un réseau de communications satellitaires, et la ré-entrée dans le réseau en cas de perte longue de connexion. Ses performances (temps d'entrée ou de ré-entrée dans le système) contribuent aux performances globales du réseau.

La procédure d'entrée d'un terminal utilisateur satellite dans un réseau satellitaire est une procédure bien connue de l'homme du métier. Elle comprend généralement deux phases :
- une première phase au cours de laquelle le terminal utilisateur se synchronise en temps et en fréquence avec le satellite et récupère des données de signalisation comprenant des informations sur la structure de la trame montante afin de pouvoir émettre une requête de connexion (en anglais *logon*) dans des instants prévus à cet effet, et
- une deuxième phase au cours de laquelle le terminal utilisateur reçoit du segment de mission une réponse de connexion avec des informations de connexion, et vient s'inscrire dans le réseau.

Connaissant l'existence et les besoins du terminal utilisateur, le réseau de communications est alors en mesure de lui attribuer des ressources pour ses transmissions. Par la suite, on appelle zone de couverture d'un satellite la surface terrestre maximale qu'il éclaire. La taille de la zone de couverture est fonction de l'altitude du satellite et des caractéristiques de son ou ses antennes.

Dans le cas d'un réseau de communications basé sur un ou plusieurs satellites géostationnaires multi-spots offrant une couverture continue de leur zone de couverture, l'entrée dans le réseau est simple puisque la position du satellite est connue et qu'un terminal utilisateur dispose d'une connectivité radio avec le satellite quelle que soit sa position dans la zone de couverture. Le terminal utilisateur peut alors démarrer une procédure standard d'entrée dans le réseau, comprenant une synchronisation avec le satellite et une inscription, à partir des données de signalisation transmises avec les données de trafic.

Dans le cas d'un satellite défilant éclairant l'ensemble de sa zone de couverture, comme par exemple un satellite dans une constellation de satellites LEO (acronyme anglais pour *Low Earth Orbit,* ou orbite basse terrestre) ou MEO (acronyme anglais pour *Medium Earth Orbit*, ou orbite moyenne terrestre), la position du satellite est inconnue, ou connue à travers des informations telles que des éphémérides dont la précision n'est pas suffisante pour pointer directement l'antenne du terminal utilisateur vers le satellite. Dans ce cas, il est connu des systèmes tels que le système de communications par satellite Iridium, dans lequel les terminaux utilisateurs ont des antennes peu directives. Cette faible directivité diminue le bilan de liaison et donc les performances des transmissions. En outre, les émissions des terminaux utilisateurs peuvent alors être en partie orientées en direction de l'arc géostationnaire, ce qui est interdit pour les transmissions à destination de satellites LEO ou MEO dans certaines bandes suivant les contraintes de régulation.

De manière alternative, pour des terminaux utilisateurs utilisant des antennes directives, il est connu de réaliser une étape de recherche et de suivi de la position du satellite avant l'entrée dans le réseau. La recherche du satellite est réalisée à la fois en élévation et en azimut, et selon les cas, également en fréquence et/ou en polarisation. Cette recherche complexifie et ralentit l'entrée du terminal utilisateur dans le réseau.

L'entrée d'un terminal utilisateur dans le réseau satellitaire n'est plus possible dès lors que le satellite n'offre qu'une couverture partielle dans sa zone de couverture, et que le terminal utilisateur se situe dans une zone non couverte. Ce cas de figure se produit dans le cas de satellites dont les transmissions utilisent le saut de faisceaux (en anglais, *beam hopping*), qui consiste à éclairer des spots géographiques en fonction des besoins des utilisateurs. Certains spots ne desservant pas d'utilisateurs actifs peuvent alors être éteints, les terminaux utilisateur présents dans une zone éteinte ne disposant pas de lien radio avec le satellite leur permettant de réaliser la procédure d'entrée dans le réseau.

Une solution connue à ce problème, décrite par exemple dans la demande de brevet PCT WO 01/26251 A2, consiste à utiliser une bande de fréquence particulière pour l'entrée dans le réseau, en utilisant pour ces transmissions un faisceau antennaire couvrant toute la zone de couverture du satellite. La bande de fréquence peut être choisie de manière à éviter les problèmes d'émissions en direction de l'arc géostationnaire. Cependant, cette solution requiert l'insertion d'équipements supplémentaires dans le satellite et une disponibilité des bandes utilisées sur toute la zone de couverture (problème de régulation de fréquence). En outre, l'utilisation d'un faisceau antennaire large réduit le gain de la liaison radio. Une autre solution à ce problème consiste à définir des intervalles temporels réservés pour l'entrée dans le réseau satellitaire durant lesquels le satellite utilise un faisceau antennaire couvrant l'ensemble de sa zone de couverture. Cette solution n'est pas satisfaisante non plus car une partie significative de la bande utile est alors utilisée pour l'entrée dans le réseau sur l'ensemble de la zone de couverture du satellite et ne peut donc être utilisée pour la transmission de données de trafic, et parce que la transmission avec un faisceau antennaire large depuis le satellite réduit le gain des liens radio.

Un objet de l'invention est donc de proposer un procédé permettant la mise en œuvre d'une procédure d'entrée dans le réseau dans le cas de satellites géostationnaires ou défilants pouvant offrir une couverture partielle de leur zone de couverture car utilisant le saut de faisceaux.

Un autre objet de l'invention est que le procédé décrit permette à un terminal d'entrer dans le réseau en un temps réduit et ait un impact réduit sur la capacité du réseau.

Enfin, un autre objet de l'invention est que, dans le cas d'un satellite défilant, le procédé permette une acquisition rapide de la position du satellite, et n'implique pas d'émissions en direction de l'arc géostationnaire.

### Résumé de l'invention :

A cet effet, la présente invention décrit un procédé d'entrée pour un terminal utilisateur dans un réseau de communications satellitaires comprenant au moins un satellite, dans lequel les communications sont organisées selon un mécanisme de saut de faisceaux où des trames de saut définissent des configurations de faisceaux antennaire du au moins un satellite. Dans le procédé selon l'invention, des ressources des trames de saut sont réservées pour la formation, par ledit au moins un satellite, de faisceaux d'entrée directifs dédiés à l'entrée ou la ré-entrée de terminaux utilisateurs dans le réseau de communications satellitaires, au moins deux des faisceaux d'entrée directifs ayant des directions de visée différentes.

Selon un mode de réalisation, les faisceaux d'entrée directifs sont utilisés pour la transmission, par le satellite, d'informations sur les modalités de transmission des demandes d'entrée ou de réentrée dans le réseau de communications satellitaires par des terminaux utilisateurs, et pour la transmission, par un ou des terminaux utilisateurs, de demandes d'entrée ou de ré-entrée dans le réseau de communications satellitaires.

Avantageusement, la quantité et la disposition des ressources des trames de saut réservées pour la formation de faisceaux d'entrée directifs est adaptable dynamiquement.

Dans un mode de réalisation, les faisceaux d'entrée directifs sont configurés de manière à ce que les faisceaux des trames de saut offrent un lien radio sur l'ensemble de la zone de couverture du satellite.

Dans un mode de réalisation, le au moins un satellite est un satellite défilant. Dans ce cas, les faisceaux d'entrée directifs sont configurés de manière à pouvoir être vus depuis la terre avec une élévation sensiblement constante.

Avantageusement, l'élévation avec laquelle les faisceaux d'entrée directifs peuvent être vus depuis la terre est comprise entre 10° et 30°, de préférence entre 15° et 25°, et de manière encore préférée sensiblement égale à 20°.

Avantageusement, les faisceaux d'entrée directifs sont configurés de manière à ce qu'une pluralité de faisceaux antennaires directifs couvre une ouverture angulaire sensiblement inférieure à 180°.

Avantageusement, les faisceaux d'entrée directifs sont orientés de manière à ce que les émissions de terminaux utilisateurs entrant ou ré-entrant dans le réseau de communications satellitaires ne soient pas faites en direction de l'arc géostationnaire.

Avantageusement, un terminal utilisateur cherchant à entrer dans le réseau de communications satellitaires est configuré pour rechercher le satellite défilant en dirigeant son faisceau antennaire avec une élévation correspondant à l'élévation du faisceau d'entrée, et en opérant une recherche du satellite en azimut seulement. Avantageusement, le terminal utilisateur utilise des informations concernant la position du satellite pour réduire son espace de recherche en azimut.

L'invention porte également sur un satellite, dans un réseau de communications satellitaires dont les communications sont organisées selon un mécanisme de saut de faisceaux où des trames de saut définissent des configurations de faisceaux antennaire du satellite. Dans le satellite selon l'invention, des ressources des trames de saut sont réservées pour la formation de faisceaux d'entrée directifs dédiés à l'entrée ou la ré-entrée de terminaux utilisateurs dans le réseau de communications satellitaires, au moins deux des faisceaux d'entrée directifs ayant des directions de visée différentes.

L'invention porte également sur un terminal utilisateur configuré pour entrer ou ré-entrer dans un réseau de communications satellitaires comprenant au moins un satellite défilant, les communications du réseau de communications satellitaires étant organisées selon un mécanisme de saut de faisceaux où des trames de saut définissent des configurations de faisceaux antennaire du au moins un satellite défilant, des ressources de la trame de saut étant réservées pour la formation, par ledit au moins un satellite défilant, de faisceaux d'entrée directifs dédiés à l'entrée ou la ré-entrée de terminaux utilisateurs dans le réseau de communications satellitaires, au moins deux des faisceaux d'entrée directifs ayant des directions de visée différentes, les faisceaux d'entrée directifs étant configurés de manière à pouvoir être vus depuis la terre avec une élévation sensiblement constante. Selon l'invention, le terminal utilisateur est configuré pour entrer ou ré-entrer dans le réseau de communications satellitaires en :
- orientant l'élévation de son faisceau antennaire vers ladite élévation sensiblement constante à laquelle peuvent être vus les faisceaux d'entrée directifs et en recherchant la position du satellite en azimut seulement,
- envoyant une demande d'entrée ou de ré-entrée dans le réseau de communications satellitaires.

Enfin, l'invention porte sur un réseau de communications satellitaires comprenant au moins un satellite tel que décrit précédemment, et au moins un terminal utilisateur.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple :
- la figure 1 illustre une succession de trames de saut de faisceaux dans un procédé d'entrée dans un réseau satellitaire selon un mode de réalisation de l'invention ;
- la figure 2a illustre le diagramme de rayonnement global d'une antenne satellitaire dans un mode de réalisation de l'invention, dans le cas d'un satellite défilant ;
- la figure 2b représente schématiquement le diagramme de rayonnement d'une antenne satellitaire dans un mode de réalisation de l'invention, dans le cas d'un satellite défilant ;
- la figure 2c représente l'allocation de ressources dans une trame de saut pour l'entrée dans le réseau dans un mode de réalisation du procédé selon l'invention ;
- la figure 2d représente l'allocation de ressources dans des trames de saut pour l'entrée dans le réseau dans un mode de réalisation du procédé selon l'invention ;
- la figure 3 illustre la mise en œuvre du procédé d'entrée d'un terminal utilisateur dans un réseau satellitaire selon un mode de réalisation de l'invention ;
- la figure 4a représente la durée d'éclairement pour un satellite LEO en orbite polaire en fonction de l'élévation du faisceau satellitaire ;
- la figure 4b représente la durée d'éclairement pour un satellite LEO en orbite inclinée en fonction de l'élévation du faisceau satellitaire ;
- la figure 5 est un diagramme représentant le déroulement des échanges entre un satellite et un terminal utilisateur pour l'entrée du terminal utilisateur dans un réseau selon un mode de réalisation de l'invention.

### Description détaillée :

L'invention décrit un procédé d'entrée d'un terminal utilisateur dans un réseau satellitaire comprenant au moins un satellite, géostationnaire ou défilant, utilisant le saut de faisceaux.

Le saut de faisceaux est un mécanisme très répandu pour les communications par satellite. Il permet une reconfigurabilité complète et instantanée de la couverture satellitaire en définissant des trames, dites trames de saut, découpées en intervalles temporels. Chaque intervalle temporel est associé à une ou plusieurs configurations de faisceaux antennaires. Les faisceaux sont formés à partir d'une antenne active, permettant généralement de former plusieurs faisceaux directifs en parallèle pour éclairer plusieurs spots simultanément, ou de plusieurs antennes directives, en utilisant une ou plusieurs fréquences et une ou plusieurs polarisations. Les trames de saut sont définies dynamiquement en fonction des besoins pour desservir au mieux l'ensemble des acteurs du réseau. Elles peuvent être représentées sous la forme d'un tableau à deux entrées associant une configuration de faisceau antennaire formé et un port antennaire du satellite pour chaque intervalle de temps. C'est le cas par exemple dans la demande de brevet EP 3.579.458 A1.

Le procédé selon l'invention consiste à dédier certaines des ressources des trames de saut pour l'entrée dans le réseau des terminaux utilisateurs, en formant dans ces ressources dédiées un faisceau antennaire directif depuis le satellite. On entend par faisceau antennaire directif le fait qu'il couvre une partie seulement de la zone de couverture du satellite, ce qui permet d'apporter du gain à la liaison entre le satellite et les terminaux utilisateurs. Les faisceaux d'entrée sont des faisceaux d'émission et/ou de réception suivant que les communications entre le satellite et les terminaux utilisateur sont faites sur la liaison montante ou sur la liaison descendante. Ils ne sont pas utilisés pour les transmissions de données de trafic (données utiles) entre les terminaux utilisateurs et le satellite, mais pour la transmission d'informations de signalisation permettant les entrées/ré-entrées de terminaux utilisateurs dans le réseau. Ces informations peuvent être, sur le lien descendant, des informations concernant la position des satellites (par exemple des éphémérides), et des informations permettant aux terminaux utilisateurs de transmettre une demande de connexion (comme par exemple des informations concernant un canal de diffusion (en anglais *broadcast*)).

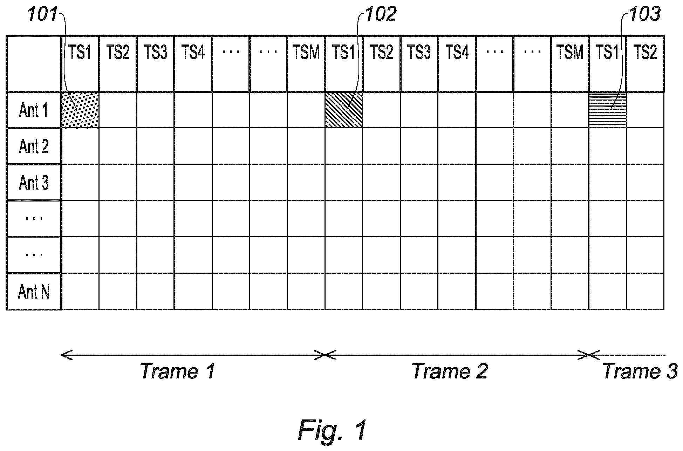

La figure 1 illustre une succession de trames de saut de faisceaux dans un procédé d'entrée dans un réseau satellitaire selon un mode de réalisation de l'invention. Les trames de saut, découpées en plusieurs intervalles temporels TS1, TS2, ..., TSM sont formées. En ordonnées de la figure 1 figurent les différents ports antennaires Ant 1, Ant 2, ..., Ant N dont dispose le satellite. Le nombre d'intervalles temporels par trame de saut et le nombre de ports antennaires sont donnés ici à titre d'illustration seulement. Dans la trame de saut, pour chaque intervalle temporel, une configuration de faisceau antennaire est associée à chaque port.

L'invention consiste à réserver à l'intérieur des trames de saut des faisceaux 101, 102 et 103 pour la formation d'un faisceau directif permettant l'entrée des terminaux dans le réseau satellitaire, dits faisceaux d'entrée. Le reste des trames de saut n'est pas affecté par le procédé selon l'invention. Dans l'exemple de la figure 1, un faisceau d'entrée est réservé dans le premier intervalle temporel de chaque trame de saut sur le premier port antennaire. Cependant, la fréquence des faisceaux dédiés à l'entrée dans le réseau peut être augmentée de manière à accélérer les entrées dans le réseau, ou diminuée de manière à consommer moins de ressources. Les faisceaux dédiés à l'entrée dans le réseau ne sont pas nécessairement répartis de manière régulière ou sur le même port antennaire : leur répartition est libre et ne dépend que des performances recherchées. Ils peuvent également être des faisceaux d'opportunité formés lorsque des ressources du satellite sont disponibles. La répartition des faisceaux d'entrée dans les trames de saut résulte donc d'un compromis entre temps d'entrée dans le réseau pour les terminaux utilisateurs et impact sur la capacité du réseau.

A titre d'exemple, avec une trame de saut de 16 ms découpée en 16 intervalles temporels de 1 ms dans un satellite comprenant 24 ports antennaires, réserver un faisceau d'entrée par trame entraîne une diminution très faible de la capacité totale du système, d'environ 0,26%.

Avantageusement, les faisceaux d'entrée peuvent tous utiliser la même fréquence porteuse (ou un nombre de fréquences porteuses limité) et/ou la même polarisation, de manière à simplifier l'étape de recherche du satellite par le terminal utilisateur.

Le faisceau d'entrée formé par le satellite est un faisceau directif dirigé vers une zone géographique particulière de la zone de couverture du satellite, de manière à offrir par intermittence un lien radio aux terminaux des zones non couvertes par le satellite. La taille de cette zone est fonction du gain recherché pour la transmission, de la quantité de ressources dédiées à l'entrée dans le réseau, de la vitesse relative du satellite et de la performance recherchée pour la durée d'entrée dans le réseau. Afin de bénéficier de gain d'antenne, les faisceaux d'entrée ont des directions de visée différentes.

Par rapport aux systèmes connus dans lesquels des intervalles temporels des trames de saut sont utilisés pour l'entrée de terminaux dans le réseau, et durant lesquels le satellite utilise une antenne non directive afin de couvrir l'ensemble de sa zone de couverture, le procédé selon l'invention utilise des faisceaux antennaires directifs pouvant être formés en parallèle d'autres faisceaux directifs couvrant d'autres parties de la zone de couverture, comme sur la figure 1. La mise en œuvre du procédé selon l'invention entraîne donc une diminution beaucoup moins importante de la capacité du système que les procédés connus. Il présente en outre l'avantage de pouvoir définir les faisceaux d'entrée dans les mêmes bandes de fréquence que les faisceaux dédiés au trafic, résolvant ainsi les problèmes d'allocations de bandes de fréquence et de matériel supplémentaire requis sur le satellite et les terminaux utilisateurs.

Dans un premier mode de réalisation, les faisceaux d'entrée sont définis de manière à éclairer tour à tour chacun des spots satellitaires de la zone de couverture du satellite. De cette manière, chaque spot de la zone de couverture du satellite est couvert de manière périodique. Un terminal utilisateur situé dans un spot non couvert aura alors nécessairement des périodes de lien radio avec le satellite, utilisables pour réaliser une procédure standard d'entrée dans le réseau.

Dans un autre mode de réalisation, les faisceaux d'entrée sont définis de manière à éclairer les unes après les autres les zones géographiques non desservies par les faisceaux de trafic de la trame de saut. Dans ce cas, les terminaux utilisateurs situés dans des zones couvertes par le satellite réalisent leur entrée dans le réseau à partir des données de signalisation échangées dans les faisceaux de trafic, tandis que les terminaux utilisateurs situés hors des zones couvertes par les faisceaux de trafic du satellite disposent d'un lien radio lorsque le faisceau d'entrée est dirigé vers eux.

Dans ces deux modes de réalisation, les faisceaux de trafic et les faisceaux d'entrée permettent de couvrir, par intermittence, l'ensemble de la zone de couverture du satellite, et donc de permettre l'entrée dans le réseau à tout utilisateur se situant dans sa zone de couverture, même lorsque ce dernier n'est pas couvert par les faisceaux de trafic.

Dans un autre mode de réalisation, spécifique au cas des satellites défilants, le faisceau d'entrée est un faisceau antennaire à élévation constante, c'est-à-dire un faisceau qui, vu du sol, forme une bande dans laquelle un terminal utilisateur dispose d'un lien radio avec le satellite lorsqu'il pointe son antenne avec une élévation correspondant à l'élévation choisie. De par la forme du diagramme de rayonnement de l'antenne du satellite, la notion d'élévation constante est à prendre avec une marge, et de légères variations autour de l'élévation fixée sont possibles.

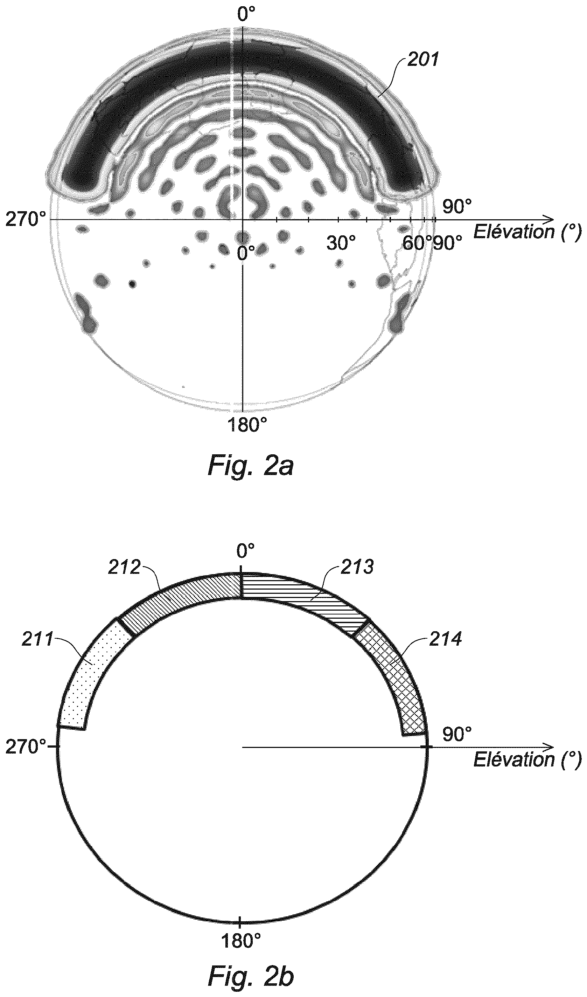

La figure 2a illustre le diagramme de rayonnement global d'une antenne satellitaire dans un mode de réalisation de l'invention, dans le cas d'un satellite défilant. La représentation est donnée en repère satellite : elle représente la zone de couverture du satellite, et donne le niveau de puissance isotrope rayonnée équivalente en fonction de la direction du faisceau et de l'élévation dans cette zone de couverture. Les zones les plus foncées correspondent aux zones de puissance les plus élevées. Sur la figure 2a, le satellite a un faisceau antennaire 201 dont la puissance est concentrée autour d'une élévation constante d'environ 20° dans le référentiel du satellite, pour une ouverture angulaire en azimut valant approximativement 150° orientée vers le nord.

L'utilisation d'un faisceau antennaire avec une élévation constante a plusieurs avantages :
- associée aux déplacements de l'ensemble des satellites de la constellation, elle permet de couvrir de manière systématique et régulière la quasi-totalité de leurs zones de couverture, et donc d'offrir une opportunité d'entrée dans le réseau aux terminaux utilisateurs non couverts par les faisceaux de trafic ;
- elle permet à un terminal satellitaire de déterminer la position du satellite en scannant l'espace sur l'axe des azimuts seulement, ce qui lève une contrainte sur la formation de faisceau du terminal satellitaire et/ou son déplacement mécanique, et accélère le temps de recherche du satellite, et donc le temps d'entrée dans le réseau. En outre, le terminal utilisateur peut utiliser un faisceau antennaire très directif puisque l'élévation du satellite est connue, ce qui améliore le bilan de liaison ;
- le faisceau antennaire du satellite est directif, ce qui permet d'apporter du gain au lien radio entre le satellite et les terminaux utilisateurs en visibilité ;
- le faisceau antennaire du satellite peut être orienté de manière à éviter les émissions des terminaux utilisateurs en direction de l'arc géostationnaire.

De manière à améliorer le bilan de liaison des faisceaux d'entrée dans le réseau, l'invention propose de découper le faisceau d'entrée en une pluralité de faisceaux ayant des directions de visée azimutales différentes, et couvrant ensemble l'ouverture angulaire du faisceau 201.

La figure 2b représente schématiquement un tel mode de réalisation, dans lequel le faisceau d'entrée à élévation constante est découpé en une pluralité de sous-faisceaux distincts. Dans l'exemple, le faisceau d'entrée est divisé en quatre sous-faisceaux 211, 212, 213 et 214 ayant la même élévation mais des directions de visées différentes, de manière à couvrir ensemble une ouverture angulaire similaire à celle de la figure 2a.

Ce mode de réalisation permet de limiter l'ouverture angulaire en azimut des faisceaux d'entrée, et donc d'améliorer le bilan de liaison. Dans l'exemple de la figure 2b, le découpage du faisceau d'entrée en quatre sous-faisceaux permet un gain sur le bilan de liaison de l'ordre de 6dB. Le nombre de sous-faisceaux peut être fixé en prenant en compte le gain souhaité sur le bilan de liaison et l'impact sur la capacité globale du système.

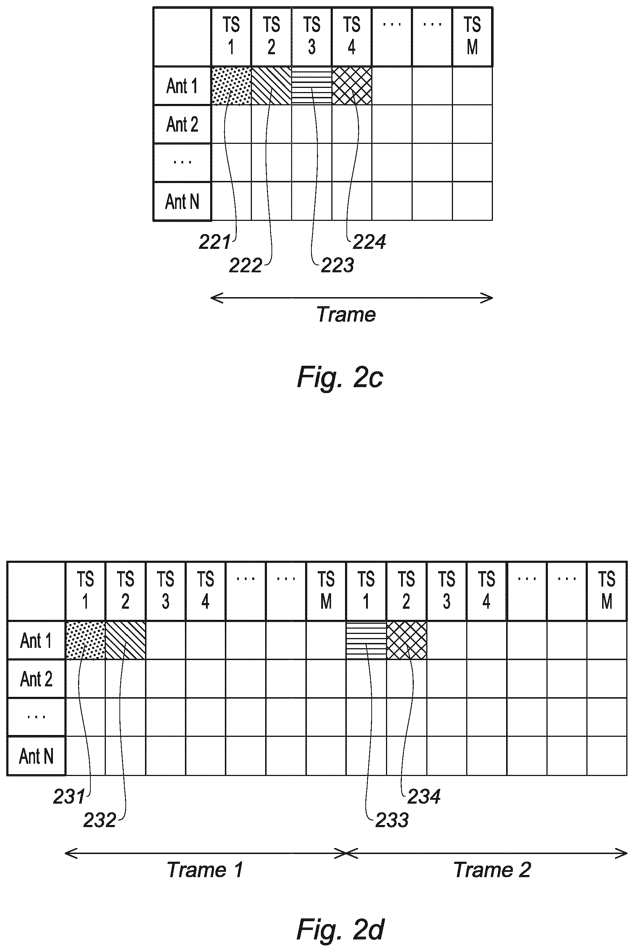

Les figures 2c et 2d représentent différents modes de réalisation de l'allocation de ressources dans une ou plusieurs trames de saut dans des modes de réalisation du procédé selon l'invention. Dans la figure 2c, les sous-faisceaux 211 à 214 sont formés au sein de chaque trame. Pour cela, les ressources 221 à 224 leur sont respectivement attribuées au sein de chaque trame. Comparé au mode de réalisation de la figure 1, l'impact de l'allocation de faisceaux d'entrée sur la capacité globale du réseau est alors multiplié par 4, mais la réduction de capacité reste inférieure aux procédés de l'état de l'art. A noter que la disposition des ressources allouées au sein de la trame de saut n'importe pas : elles peuvent de manière identique être attribuées dans un même intervalle temporel sur des ports antennaires distincts, ou selon n'importe quelle autre configuration.

Dans la figure 2d, les ressources 231 à 234, respectivement attribuées pour la formation des faisceaux d'entrée 211 à 214, sont allouées sur différentes trames de saut. Dans la figure 2d les quatre sous-faisceaux sont répartis sur deux trames successives. Comparé au mode de réalisation de la figure 2c, l'impact sur la capacité du réseau est réduit, mais la durée pendant laquelle le satellite est observable par un terminal utilisateur est divisée par deux.

Les définitions de trames données aux figures 2c et 2d le sont à titre d'illustration seulement, et l'homme du métier pourrait facilement modifier ces définitions en fonction de ses besoins opérationnels, en particulier le gain attendu sur le faisceau d'entrée, la durée de visibilité du satellite et l'impact souhaité sur la capacité globale du réseau. En outre, la répartition des ressources attribuées pour la formation de faisceaux d'entrée peut être adaptée dynamiquement, par exemple pour former plus de faisceaux dans les zones où les conditions de propagation sont défavorables (par exemple autour de l'équateur, où lorsque les conditions météorologiques sont défavorables) afin d'améliorer les bilans de liaison. Par exemple, huit faisceaux d'entrée pourraient être définis (quatre allocations par trame étalés sur deux trames successives) pour les transmissions à proximité de l'équateur, et seulement quatre (deux allocations par trame étalés sur deux trames successives) au-dessus de 50° de latitude.

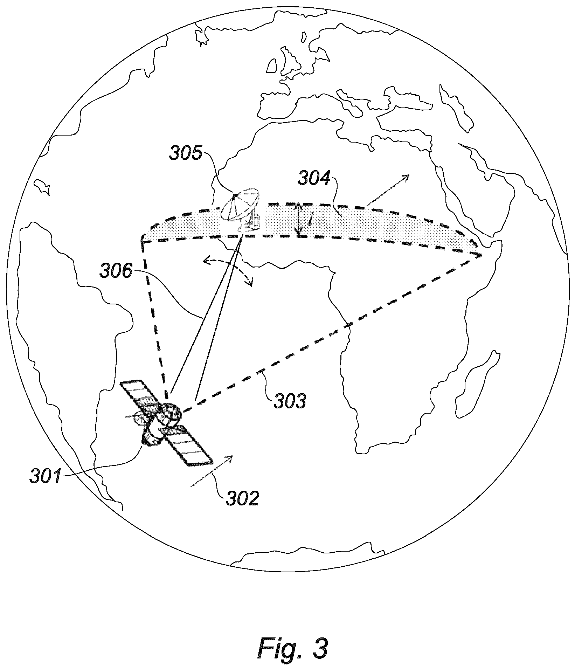

La figure 3 illustre la mise en œuvre du procédé d'entrée d'un terminal utilisateur dans un réseau satellitaire selon un mode de réalisation de l'invention, dans le cas d'un satellite défilant. Le satellite défilant 301, par exemple un satellite LEO se déplaçant selon une orbite inclinée dans la direction 302, est configuré pour former un faisceau antennaire à élévation constante 303, dont l'empreinte au sol se matérialise comme une bande 304 incurvée de par la rotondité de la terre. L'empreinte au sol 304 correspond à la somme des sous-faisceaux d'entrée formés de manière à couvrir un azimut large tout en bénéficiant d'un gain antennaire important, comme représenté à la figure 2b. La bande 304 a une largeur *l* qui dépend de l'altitude du satellite et de l'ouverture du faisceau antennaire. La zone 304 se déplace en même temps que le satellite 301. Un terminal utilisateur 305 cherchant à entrer dans le réseau satellitaire et dont l'antenne est positionnée à la bonne élévation est donc en visibilité radio avec le satellite 301 pendant une durée qui dépend de la vitesse du satellite, de son altitude, de la configuration du faisceau d'entrée, de l'angle d'élévation choisi et du nombre de sous-faisceaux d'entrée formés. Par exemple, pour un satellite défilant LEO formant un faisceau d'entrée de 4° d'ouverture selon l'axe nord-sud autour d'une élévation d'environ 20° pour un terminal utilisateur, l'empreinte au sol 304 a une largeur *l* supérieure à 300 km. Si le satellite se déplace sur une orbite polaire avec une vitesse de 7,4 km/sec, un terminal utilisateur pointant avec une élévation de 20° sera en visibilité du satellite pendant environ 40 secondes. Cette durée peut être mise à profit par le terminal utilisateur pour détecter le satellite en scannant le ciel en azimut seulement, pour ensuite réaliser la procédure d'entrée dans le réseau (synchronisation et inscription).

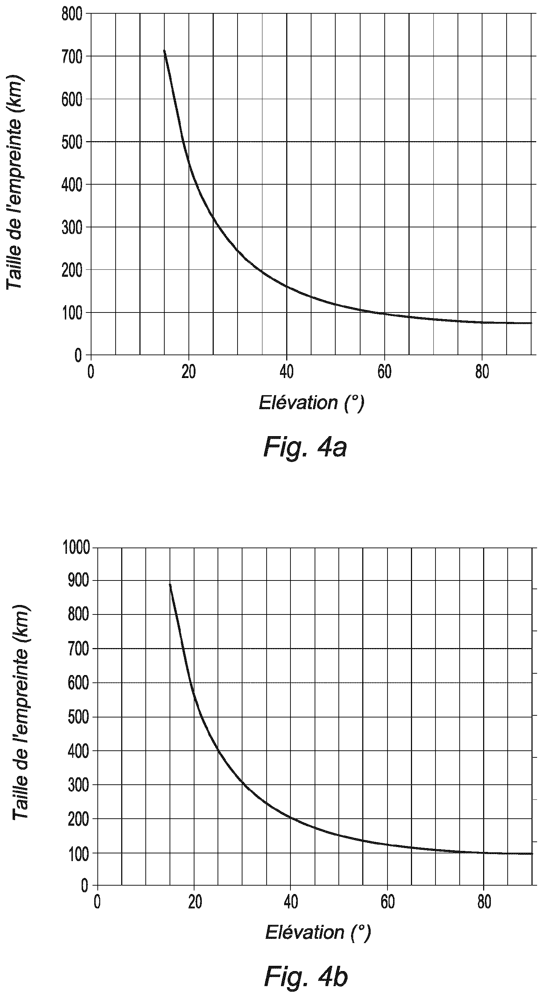

L'élévation et l'ouverture du faisceau d'entrée sont choisis en fonction du déplacement du satellite de manière à favoriser le temps de visibilité par un terminal utilisateur et à maximiser le gain d'antenne. Les figures 4a et 4b représentent la durée pendant laquelle un terminal utilisateur est en visibilité d'un satellite LEO défilant à 7,4 km/sec avec un faisceau antennaire ouvert de 4° selon l'axe nord-sud, en fonction du choix pris concernant l'élévation du faisceau d'entrée. La figure 4a prend l'hypothèse d'un satellite se déplaçant selon une orbite polaire à environ 1000 km d'altitude, tandis que la figure 4b prend l'hypothèse d'un satellite se déplaçant selon une orbite inclinée à environ 1200 km d'altitude. Dans le cas d'application donné, la largeur *l* du faisceau 304 est toujours supérieure à 300km lorsque l'élévation comprise est choisie entre 15° et 25°.

Idéalement, le faisceau antennaire à élévation constante transmis par un satellite défilant a une ouverture angulaire de quelques degrés sur le petit axe de son empreinte au sol, typiquement une ouverture angulaire à -3 dB inférieure à 10°, typiquement de l'ordre de 4 à 5°, et couvre 360° en azimut, de manière à offrir un lien radio au plus grand nombre possible de terminaux utilisateurs. Cependant, des considérations règlementaires interdisent les émissions des terminaux utilisateurs en direction de l'arc géostationnaire dans certaines bandes de fréquences. C'est pourquoi les sous-faisceaux dédiés à l'entrée dans le réseau sont avantageusement choisis de manière à présenter ensemble un angle d'ouverture en azimut légèrement inférieur à 180° et dirigé vers un pôle. C'est le cas par exemple sur la figure 2b, où le faisceau d'entrée correspondant aux quatre sous-faisceaux 211 à 214 a une ouverture en azimut de 150° environ. Cette configuration permet d'éviter les émissions des terminaux utilisateurs en direction de l'arc géostationnaire sur une partie du globe.

En faisant varier l'orientation du faisceau d'entrée équivalent formé par les différents sous-faisceaux d'entrée au cours de la progression du satellite défilant, les émissions des terminaux utilisateurs pendant la procédure d'entrée dans le réseau sont systématiquement réalisées dans la direction opposée à l'arc géostationnaire. Par exemple, pour un satellite suivant une orbite polaire le faisceau à élévation constante peut être modifié comme suit :
- lorsque le satellite évolue depuis l'équateur en direction du pôle nord, les différents sous-faisceaux d'entrée forment un faisceau d'entrée équivalent orienté vers le pôle sud, c'est-à-dire en arrière du satellite ;
- lorsque le satellite évolue depuis le pôle nord en direction de l'équateur, les différents sous-faisceaux d'entrée forment un faisceau d'entrée équivalent orienté vers le pôle sud, c'est-à-dire en avant du satellite ;
- lorsque le satellite évolue depuis l'équateur en direction du pôle sud, les différents sous-faisceaux d'entrée forment un faisceau d'entrée équivalent orienté vers le pôle nord, c'est-à-dire en arrière du satellite ;
- Lorsque le satellite évolue depuis le pôle sud en direction de l'équateur, les différents sous-faisceaux d'entrée forment un faisceau d'entrée équivalent orienté vers le pôle nord, c'est-à-dire en avant du satellite.

Qu'il suive une orbite polaire ou une orbite inclinée, orienter le faisceau d'entrée équivalent en direction des pôles, en commutant au moins quatre fois durant la période de rotation permet d'éviter les émissions des terminaux satellitaires en direction de l'arc géostationnaire.

Aux environs des pôles, lorsque la zone d'exclusion correspondant à l'arc géostationnaire n'est pas en visibilité des terminaux satellites, le satellite peut orienter le faisceau d'entrée directif équivalent à la fois vers l'avant et vers l'arrière du satellite, ou modifier l'orientation du faisceau en l'inclinant de manière avoir une surface couverte vue du sol plus importante.

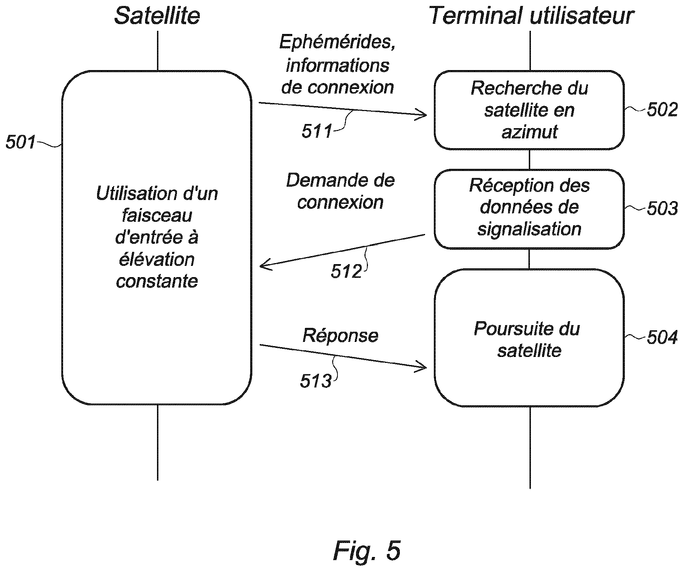

La figure 5 est un diagramme représentant le déroulement de l'entrée d'un terminal utilisateur dans un réseau de télécommunications selon un mode de réalisation de l'invention, dans le cas d'un satellite défilant avec un faisceau d'entrée à élévation constante et d'un utilisateur situé dans une zone non couverte par le satellite. Ce diagramme est un mode de réalisation donné à titre d'illustration seulement.

Le satellite forme des faisceaux antennaires à élévation constante dans des ressources de la trame de saut dédiées à l'entrée dans le réseau, les faisceaux d'entrée étant orientés dans au moins deux directions différentes. Avantageusement, les faisceaux antennaires d'entrée sont configurées manière à couvrir ensemble un azimut large, de préférence sensiblement inférieur à 180°, tel que par exemple les sous-faisceaux représentés à la figure 2b. Le satellite utilise ces faisceaux pour transmettre des informations de signalisation 511, comme par exemple des éphémérides permettant au terminal utilisateur de déterminer sa position et la position des autres satellites de la constellation, et des informations permettant au terminal utilisateur de transmettre une requêtes de connexion sur le réseau, comme par exemple un canal fréquentiel et/ou des intervalles temporels en contention.

De son côté, le terminal utilisateur est configuré pour utiliser une antenne avec un faisceau antennaire directif orienté avec une élévation correspondant aux faisceaux d'entrée pour réaliser la détection 502 du satellite, et rechercher la position du satellite en azimut seulement.

Avantageusement, lorsque le satellite est configuré pour orienter les faisceaux d'entrée de manière à éviter les transmissions des terminaux utilisateurs en direction de l'arc géostationnaire, les terminaux utilisateurs peuvent se contenter de rechercher le satellite sur un azimut inférieur à 180° dans la direction opposée à l'arc géostationnaire.

Avantageusement, afin d'accélérer la recherche du satellite, le terminal utilisateur peut utiliser des informations stockées en mémoire concernant le positionnement du satellite pour réduire la zone de recherche en azimut. Ces informations peuvent par exemple être des éphémérides lui permettant de reconstituer la position du satellite. Dans ce cas, le terminal utilisateur est capable de calculer de manière assez précise son azimut, ce qui lui permet de limiter la recherche autour de la position attendue du satellite. Cependant, les éphémérides ont une durée très faible de validité (quelques heures). De manière avantageuse, l'invention propose d'utiliser des informations de type RAAN (acronyme anglais pour *Right Ascension of the Ascending Node*), donnant l'angle avec lequel un satellite montant vers le nord croise l'équateur. Ces informations permettent de déterminer l'orbite du satellite, et de limiter en conséquence la plage de recherche en azimut. Les informations de RAAN ont une durée de validité beaucoup plus importante que les éphémérides, de l'ordre de plusieurs années. La recherche de la position du satellite est alors plus rapide et moins couteuse en traitements, ce qui permet de libérer du temps pour la procédure d'entrée dans le réseau elle-même.

Une fois le satellite détecté, le terminal utilisateur récupère les données de signalisation transmises par le satellite, en particulier les éphémérides et les informations sur les modalités de connexion.

Les éphémérides permettent au terminal utilisateur de suivre la position du satellite lors de ses déplacements pendant la période de visibilité, et donc de rester en lien radio avec le satellite même lorsque l'antenne du terminal utilisateur est très directive. Les informations sur les modalités de connexion lui permettent de connaitre les instants et canaux fréquentiels dédiés à la transmission des requêtes de connexion.

Le terminal utilisateur est alors en mesure d'opérer une demande de connexion 512 auprès du satellite. Le satellite transmet cette demande à un centre de mission qui enregistre la présence du terminal utilisateur, l'autorise ou non à faire partie du réseau, l'inscrit et lui attribue des paramètres réseau, comme par exemple une adresse IP. Le satellite envoie alors une réponse 513 au terminal utilisateur l'information de l'état de son inscription dans le réseau et de ses paramètres réseau.

Une fois ces étapes réalisées, le terminal utilisateur est inscrit dans le réseau de communications satellitaires, et le gestionnaire de réseau en charge de la définition des trames de saut de faisceaux le prend en compte lors de ses affectations suivantes.

L'ensemble des échanges représentés à la figure 5 peuvent être réalisés sur une seule ressource des trames de saut dédiée à l'entrée dans le réseau, ou sur plusieurs ressources dédiées lors d'un ou de plusieurs passages en visibilité du satellite.

Le fonctionnement du procédé selon l'invention pour les satellites géostationnaires diffère en ce que le faisceau d'entrée n'est pas à élévation constante, et qu'il n'est pas indispensable de transmettre les informations relatives au positionnement du satellite, ni de procéder à l'étape 502 de recherche du satellite.

Le procédé d'entrée dans un réseau de télécommunications selon l'invention comprend donc des ressources réservées dans les trames de saut de faisceaux pour les entrées/ré-entrées dans le réseau, durant lesquelles au moins un satellite du réseau est configuré pour avoir un faisceau antennaire directif :
- orienté de manière à ce que, avec les faisceaux de trafic, l'ensemble de la zone de couverture du satellite dispose d'un lien radio avec le satellite, ou
- formé de manière à ce que les faisceaux d'entrée soient observables avec une élévation constante depuis la terre, pour un réseau de satellites défilants.

Dans le procédé d'entrée selon l'invention, les faisceaux d'entrée peuvent être planifiés en parallèle avec des faisceaux de trafic, et dans les mêmes bandes de fréquence.

Pour les satellites défilants, le procédé selon l'invention découpe le faisceau d'entrée en une pluralité de faisceaux d'ouverture angulaire inférieure en azimut transmis sur des ressources différentes des trames de saut afin d'améliorer le bilan de liaison. Avantageusement, il est possible d'orienter le faisceau de manière à ce que les émissions des terminaux utilisateurs ne se fassent pas dans la direction de l'arc géostationnaire.

L'invention porte également sur un satellite comprenant des moyens de formation de faisceaux antennaire, et configuré pour former des faisceaux d'entrée directifs en utilisant les ressources dédiées de la trame de saut, et sur un réseau de communications satellitaires comprenant un tel satellite. Selon un mode de réalisation, il s'agit d'un satellite défilant configuré pour orienter les faisceaux d'entrée de manière à ce qu'ils soient vus depuis la terre avec une élévation sensiblement constante.

L'invention porte également sur un terminal utilisateur satellite, configuré pour rechercher la présence d'un satellite défilant en positionnant son antenne avec l'élévation donnée du faisceau d'entrée, et en réalisant un scan de l'espace en azimut seulement. Ce terminal utilisateur est configuré pour, une fois le satellite détecté, récupérer des informations de connexion, et transmettre une demande d'entrée/de ré-entrée dans le réseau de communications satellitaires.

## Revendications

1. Procédé d'entrée pour un terminal utilisateur (305) dans un réseau de communications satellitaires comprenant au moins un satellite (301), les communications du réseau de communications satellitaires étant organisées selon un mécanisme de saut de faisceaux dans lequel des trames de saut définissent des configurations de faisceaux antennaire du au moins un satellite, le procédé étant **caractérisé en ce que** des ressources (101, 102, 103, 221, 222, 223, 224, 231, 232, 233, 234) des trames de saut sont réservées pour la formation, par ledit au moins un satellite (301), de faisceaux d'entrée directifs (211, 212, 213, 214) dédiés à l'entrée ou la ré-entrée de terminaux utilisateurs dans le réseau de communications satellitaires, au moins deux des faisceaux d'entrée directifs (211, 212, 213, 214) ayant des directions de visée différentes.

2. Procédé d'entrée pour un terminal utilisateur (305) dans un réseau de communications satellitaires selon la revendication 1, dans lequel les faisceaux d'entrée directifs sont utilisés pour la transmission (511), par le satellite, d'informations sur les modalités de transmission des demandes d'entrée ou de réentrée dans le réseau de communications satellitaires par des terminaux utilisateurs, et pour la transmission (512), par un ou des terminaux utilisateurs, de demandes d'entrée ou de ré-entrée dans le réseau de communications satellitaires.

3. Procédé d'entrée pour un terminal utilisateur (305) dans un réseau de communications satellitaires selon l'une des revendications précédentes, dans lequel la quantité et la disposition des ressources des trames de saut réservées pour la formation de faisceaux d'entrée directifs est adaptable dynamiquement.

4. Procédé d'entrée pour un terminal utilisateur (305) dans un réseau de communications satellitaires selon l'une des revendications précédentes, dans lequel les faisceaux d'entrée directifs sont configurés de manière à ce que les faisceaux des trames de saut offrent un lien radio sur l'ensemble de la zone de couverture du satellite.

5. Procédé d'entrée pour un terminal utilisateur (305) dans un réseau de communications satellitaires selon l'une des revendications 1 et 3, dans lequel le au moins un satellite est un satellite défilant (301), et dans lequel les faisceaux d'entrée directifs (211, 212, 213, 214) sont configurés de manière à pouvoir être vus depuis la terre avec une élévation sensiblement constante.

6. Procédé d'entrée pour un terminal utilisateur (305) dans un réseau de communications satellitaires selon la revendication 5, dans lequel l'élévation avec laquelle les faisceaux d'entrée directifs peuvent être vus depuis la terre est comprise entre 10° et 30°, de préférence entre 15° et 25°, et de manière encore préférée sensiblement égale à 20°.

7. Procédé d'entrée pour un terminal utilisateur (305) dans un réseau de communications satellitaires selon l'une des revendications 5 et 6, dans lequel les faisceaux d'entrée directifs sont configurés de manière à ce qu'une pluralité de faisceaux antennaires directifs (211, 212, 213, 214) couvre une ouverture angulaire sensiblement inférieure à 180°.

8. Procédé d'entrée pour un terminal utilisateur (305) dans un réseau de communications satellitaires selon l'une des revendications 5 à 7, dans lequel les faisceaux d'entrée directifs sont orientés de manière à ce que les émissions de terminaux utilisateurs entrant ou ré-entrant dans le réseau de communications satellitaires ne soient pas faites en direction de l'arc géostationnaire.

9. Procédé d'entrée pour un terminal utilisateur (305) dans un réseau de communications satellitaires selon l'une des revendications 5 à 8, dans lequel un terminal utilisateur (305) cherchant à entrer dans le réseau de communications satellitaires est configuré pour rechercher (502) ledit au moins un satellite défilant en dirigeant son faisceau antennaire avec une élévation correspondant à l'élévation du faisceau d'entrée, et en opérant une recherche du satellite en azimut seulement.

10. Procédé d'entrée pour un terminal utilisateur (305) dans un réseau de communications satellitaires selon la revendication 9, dans lequel le terminal utilisateur utilise des informations concernant la position du satellite pour réduire son espace de recherche en azimut.

11. Satellite (301) dans un réseau de communications satellitaires dont les communications sont organisées selon un mécanisme de saut de faisceaux où des trames de saut définissent des configurations de faisceaux antennaire du satellite, le satellite étant **caractérisé en ce que** des ressources des trames de saut (101, 102, 103) sont réservées pour la formation de faisceaux d'entrée directifs (211, 212, 213, 214) dédiés à l'entrée ou la ré-entrée de terminaux utilisateurs dans le réseau de communications satellitaires, au moins deux des faisceaux d'entrée directifs ayant des directions de visée différentes.

12. Terminal utilisateur (305) configuré pour entrer ou ré-entrer dans un réseau de communications satellitaires comprenant au moins un satellite défilant (301), les communications du réseau de communications satellitaires étant organisées selon un mécanisme de saut de faisceaux où des trames de saut définissent des configurations de faisceaux antennaire du au moins un satellite défilant, des ressources de la trame de saut (101, 102, 103) étant réservées pour la formation, par ledit au moins un satellite défilant (301), de faisceaux d'entrée directifs (211, 212, 213, 214) dédiés à l'entrée ou la ré-entrée de terminaux utilisateurs dans le réseau de communications satellitaires, au moins deux des faisceaux d'entrée directifs ayant des directions de visée différentes, les faisceaux d'entrée directifs étant configurés de manière à pouvoir être vus depuis la terre avec une élévation sensiblement constante, le terminal utilisateur étant **caractérisé en ce qu'**il est configuré pour entrer ou ré-entrer dans le réseau de communications satellitaires en :
- orientant (502) l'élévation de son faisceau antennaire vers ladite élévation sensiblement constante à laquelle peuvent être vus les faisceaux d'entrée directifs, et en recherchant la position du satellite en azimut seulement,
- envoyant (512) une demande d'entrée ou de ré-entrée dans le réseau de communications satellitaires.

13. Réseau de communications satellitaires **caractérisé en ce qu'**il comprend au moins un satellite selon la revendication 11 et au moins un terminal utilisateur.

## Patentansprüche

1. Verfahren für den Eintritt eines Benutzerendgeräts (305) in ein Satellitenkommunikationsnetz, das mindestens einen Satelliten (301) umfasst, wobei die Kommunikationen des Satellitenkommunikationsnetzes gemäß einem Strahlsprungmechanismus organisiert sind, wobei Sprungrahmen Konfigurationen von Antennenstrahlen des mindestens einen Satelliten definieren, wobei das Verfahren **dadurch gekennzeichnet ist, dass** Ressourcen (101, 102, 103, 221, 222, 223, 224, 231, 232, 233, 234) der Sprungrahmen für die Bildung, durch den mindestens einen Satelliten (301), von gerichteten Eintrittsstrahlen (211, 212, 213, 214) reserviert sind, die dem Eintritt oder dem Wiedereintritt von Benutzerendgeräten in das Satellitenkommunikationsnetz gewidmet sind, wobei mindestens zwei der gerichteten Eintrittsstrahlen (211, 212, 213, 214) verschiedene Zielrichtungen aufweisen.

2. Verfahren für den Eintritt eines Benutzerendgeräts (305) in ein Satellitenkommunikationsnetz nach Anspruch 1, wobei die gerichteten Eintrittsstrahlen für die Übertragung (511), durch den Satelliten, von Informationen über die Modalitäten der Übertragung von Eintritts- oder Wiedereintrittsanfragen in das Satellitenkommunikationsnetz durch Benutzerendgeräte, und für die Übertragung (512), durch ein oder mehrere Benutzerendgeräte, von Eintritts- oder Wiedereintrittsanfragen in das Satellitenkommunikationsnetz verwendet werden.

3. Verfahren für den Eintritt eines Benutzerendgeräts (305) in ein Satellitenkommunikationsnetz nach einem der vorstehenden Ansprüche, wobei die Menge und die Anordnung der Ressourcen der Sprungrahmen, die für die Bildung von gerichteten Eintrittsstrahlen reserviert sind, dynamisch anpassbar ist.

4. Verfahren für den Eintritt eines Benutzerendgeräts (305) in ein Satellitenkommunikationsnetz nach einem der vorstehenden Ansprüche, wobei die gerichteten Eintrittsstrahlen so konfiguriert sind, dass die Strahlen der Sprungrahmen eine Funkverbindung über die gesamte Abdeckungszone des Satelliten hinweg bereitstellen.

5. Verfahren für den Eintritt eines Benutzerendgeräts (305) in ein Satellitenkommunikationsnetz nach einem der Ansprüche 1 und 3, wobei der mindestens eine Satellit ein mobiler Satellit (301) ist und wobei die gerichteten Eintrittsstrahlen (211, 212, 213, 214) so konfiguriert sind, dass sie von der Erde aus mit einer im Wesentlichen konstanten Elevation sichtbar sind.

6. Verfahren für den Eintritt eines Benutzerendgeräts (305) in ein Satellitenkommunikationsnetz nach Anspruch 5, wobei die Elevation, mit der die gerichteten Eintrittsstrahlen von der Erde aus sichtbar sind, zwischen 10° und 30°, bevorzugt zwischen 15° und 25°, und noch weiter bevorzugt im Wesentlichen gleich 20° beträgt.

7. Verfahren für den Eintritt eines Benutzerendgeräts (305) in ein Satellitenkommunikationsnetz nach einem der Ansprüche 5 und 6, wobei die gerichteten Eintrittsstrahlen so konfiguriert sind, dass eine Vielzahl gerichteter Antennenstrahlen (211, 212, 213, 214) einen Winkelbereich abdecken, der im Wesentlichen kleiner als 180° ist.

8. Verfahren für den Eintritt eines Benutzerendgeräts (305) in ein Satellitenkommunikationsnetz nach einem der Ansprüche 5 bis 7, wobei die gerichteten Eintrittsstrahlen so ausgerichtet sind, dass die Sendungen von Benutzerendgeräten, die in das Satellitenkommunikationsnetz eintreten oder wieder eintreten, nicht in Richtung des geostationären Bogens erfolgen.

9. Verfahren für den Eintritt eines Benutzerendgeräts(305) in ein Satellitenkommunikationsnetz nach einem der Ansprüche 5 bis 8, wobei ein Benutzerendgerät (305), das in das Satellitenkommunikationsnetz eintreten möchte, konfiguriert ist, um den mindestens einen mobilen Satelliten zu suchen (502), indem es seinen Antennenstrahl mit einer Elevation ausrichtet, die der Elevation des Eintrittsstrahls entspricht, und indem es eine Suche des Satelliten nur im Azimut durchführt.

10. Verfahren für den Eintritt eines Benutzerendgeräts (305) in ein Satellitenkommunikationsnetz nach Anspruch 9, wobei das Benutzerendgerät Informationen bezüglich der Position des Satelliten nutzt, um seinen Suchbereich im Azimut zu verringern.

11. Satellit (301) in einem Satellitenkommunikationsnetz, dessen Kommunikation gemäß einem Strahlsprungmechanismus organisiert ist, wobei Sprungrahmen Konfigurationen von Antennenstrahlen des Satelliten definieren, wobei der Satellit **dadurch gekennzeichnet ist, dass** Ressourcen der Sprungrahmen (101, 102, 103) für die Bildung von gerichteten Eintrittsstrahlen (211, 212, 213, 214) reserviert sind, die dem Eintritt oder dem Wiedereintritt von Benutzerendgeräten in das Satellitenkommunikationsnetz gewidmet sind, wobei mindestens zwei der gerichteten Eintrittsstrahlen verschiedene Zielrichtungen aufweisen.

12. Benutzerendgerät (305), konfiguriert zum Eintritt oder Wiedereintritt in ein Satellitenkommunikationsnetz, das mindestens einen mobilen Satelliten (301) umfasst, wobei die Kommunikationen des Satellitenkommunikationsnetzes gemäß einem Strahlsprungmechanismus organisiert ist, wobei Sprungrahmen Konfigurationen von Antennenstrahlen des mindestens einen mobilen Satelliten definieren, Ressourcen des Sprungrahmens (101, 102, 103) für die Bildung, durch den mindestens einen mobilen Satelliten (301) von gerichteten Eintrittsstrahlen (211, 212, 213, 214) reserviert sind, die dem Eintritt oder dem Wiedereintritt von Benutzerendgeräten in das Satellitenkommunikationsnetz gewidmet sind, wobei mindestens zwei der gerichteten Eintrittsstrahlen verschiedene Zielrichtungen aufweisen, die gerichteten Eintrittsstrahlen so konfiguriert sind, dass sie von der Erde aus mit einer im Wesentlichen konstanten Elevation sichtbar sind, wobei das Benutzerendgerät **dadurch gekennzeichnet ist, dass** es konfiguriert ist, um in das Satellitenkommunikationsnetz einzutreten oder wieder einzutreten durch:
- Ausrichten (502) der Elevation seines Antennenstrahls auf die im Wesentlichen konstante Elevation, mit der die gerichteten Eintrittsstrahlen sichtbar sind, und Suchen der Position des Satelliten nur im Azimut,
- Senden (512) einer Eintritts- oder Wiedereintrittsanfrage in das Satellitenkommunikationsnetz.

13. Satellitenkommunikationsnetz, **dadurch gekennzeichnet, dass** es mindestens einen Satelliten nach Anspruch 11 und mindestens ein Benutzerendgerät umfasst.

## Claims

1. Entry method for a user terminal (305) in a satellite communication network comprising at least one satellite (301), the communications of the satellite communication network being organized in accordance with a beam hopping mechanism, in which hopping grids define configurations of antenna beams of the at least one satellite, the method being **characterized in that** resources (101, 102, 103, 221, 222, 223, 224, 231, 232, 233, 234) of the hopping grids are reserved for forming, by the at least one satellite (301), directional entry beams (211, 212, 213, 214) which are dedicated to the entry or re-entry of user terminals in the satellite communication network, at least two of the directional entry beams (211, 212, 213, 214) having different sighting directions.

2. Entry method for a user terminal (305) in a satellite communication network according to claim 1, wherein the directional entry beams are used for the transmission (511), by the satellite, of information items concerning the methods of transmission of the requests for entry or re-entry in the satellite communication network by user terminals and for the transmission (512), by one or more user terminals, of requests for entry or re-entry in the satellite communication network.

3. Entry method for a user terminal (305) in a satellite communication network according to either of the preceding claims, wherein the quantity and the arrangement of the resources of the hopping grids reserved for forming directional entry beams can be dynamically adapted.

4. Entry method for a user terminal (305) in a satellite communication network according to any one of the preceding claims, wherein the directional entry beams are configured so that the beams of the hopping grids provide a radio link over the whole of the coverage area of the satellite.

5. Entry method for a user terminal (305) in a satellite communication network according to any one of claims 1 to 3, wherein the at least one satellite is a moving satellite (301) and wherein the directional entry beams (211, 212, 213, 214) are configured so as to be able to be seen from the ground with a substantially constant elevation.

6. Entry method for a user terminal (305) in a satellite communication network according to claim 5, wherein the elevation at which the directional entry beams can be seen from the ground is between 10° and 30°, preferably between 15° and 25°, and in a further preferred manner is substantially 20°.

7. Entry method for a user terminal (305) in a satellite communication network according to either claim 5 or claim 6, wherein the directional entry beams are configured so that a plurality of directional entry beams (211, 212, 213, 214) cover an angular opening substantially less than 180°.

8. Entry method for a user terminal (305) in a satellite communication network according to any one of claims 5 to 7, wherein the directional entry beams are orientated so that the transmissions of user terminals which enter or re-enter the satellite communication network are not carried out in the direction of the geostationary arc.

9. Entry method for a user terminal (305) in a satellite communication network according to any one of claims 5 to 8, wherein a user terminal (305) which attempts to enter the satellite communication network is configured to search (502) for the at least one moving satellite by directing its antenna beam with an elevation corresponding to the elevation of the entry beam and by carrying out a search for the satellite in terms of azimuth only.

10. Entry method for a user terminal (305) in a satellite communication network according to claim 9, wherein the user terminal uses information items relating to the position of the satellite in order to reduce its search space in terms of azimuth.

11. Satellite (301) in a satellite communication network, the communications of which are organized in accordance with a beam hopping mechanism, in which hopping grids define configurations of antenna beams of the satellite, the satellite being **characterized in that** resources of the hopping grids (101, 102, 103) are reserved for forming directional entry beams (211, 212, 213, 214) which are dedicated to the entry or re-entry of user terminals in the satellite communication network, at least two of the directional entry beams having different sighting directions.

12. User terminal (305) configured to enter or re-enter a satellite communication network comprising at least one moving satellite (301), the communications of the satellite communication network being organized in accordance with a beam hopping mechanism, in which hopping grids define configurations of antenna beams of the at least one moving satellite, resources of the hopping grid (101, 102, 103) being reserved for forming, by the at least one moving satellite (301), directional entry beams (211, 212, 213, 214) which are dedicated to the entry or re-entry of user terminals in the satellite communication network, at least two of the directional entry beams having different sighting directions, the directional entry beams being configured so as to be able to be seen from the ground at a substantially constant elevation, the user terminal being **characterized in that** it is configured to enter or re-enter the satellite communication network by:
- orientating (502) the elevation of its antenna beam towards the substantially constant elevation at which the directional entry beams can be seen and by seeking the position of the satellite in terms of azimuth only,
- sending (512) a request for entry or re-entry in the satellite communication network.

13. Satellite communication network, **characterized in that** it comprises at least one satellite according to claim 11 and at least one user terminal.
